# EUROPÄISCHE PATENTSCHRIFT

(11) **EP 3 947 270 B1**
(45) Veröffentlichungstag und Bekanntmachung des Hinweises auf die Patenterteilung: **05.06.2024**
(21) Anmeldenummer: 20715293.5
(22) Anmeldetag: 24.03.2020
(51) Int. Cl.: C01B 7/07, B01D 53/14, B01D 53/68, B01D 3/14

(54) **HCL-RUECKGEWINNUNGSEINHEIT**
HCL RECOVERY UNIT
UNITÉ DE RÉCUPÉRATION DE HCL

(30) Priorität: 29.03.2019 DE 102019204498
(43) Veröffentlichungstag der Anmeldung: 09.02.2022
(73) Patentinhaber: SGL Carbon SE, 65201 Wiesbaden (DE)
(72) Erfinder: WOLTZ, Christian, 86405 Meitingen (DE); ANGELES PALACIOS, Odón de Jesús, 86405 Meitingen (DE); KIBILI, Martin, 86405 Meitingen (DE); LEUSCHNER, Christopher, 86405 Meitingen (DE)
(86) Internationale Anmeldenummer: PCT/EP2020/058053
(87) Internationale Veröffentlichungsnummer: WO 2020/165462

(56) Entgegenhaltungen:
- WO-A1-2018/108811
- US-A- 5 174 865
- US-A1- 2006 099 138
- US-A1- 2016 289 099

## Beschreibung

Die vorliegende Erfindung betrifft eine Einheit und ein Verfahren zur Rückgewinnung von Chlorwasserstoff (HCl) aus chlorwasserstoffsauren, mit schwer- oder nichtflüchtigen Verunreinigungen belasteten, wässrigen Flüssigkeiten, die insbesondere bei der Herstellung von Aluminiumoxid als Nebenproduktstrom, anfallen.

### Beschreibung

Aluminiumoxid kann aus Bauxit gewonnen werden. Überwiegend wird dazu der Bayer-Prozess angewendet, wobei Bauxit unter Druck mit Natriumhydroxid (z.B. 7 bar, 180°C) aufgeschlossen wird, unlösliche Verunreinigungen abgetrennt und Aluminiumhydroxid aus dem Überstand ausgefällt wird. Das Aluminiumhydroxid wird durch Calcination zu Aluminiumoxid umgesetzt. Dieser Prozess benötigt sehr viel Energie. Als dieser Prozess entwickelt wurde, standen Erze mit hohen Aluminiumgehalten in ausreichender Menge zur Verfügung.

Die heute verbleibenden aluminiumhaltigen Erze weisen teils einen deutlich geringeren Aluminiumgehalt auf. Es werden alternative, effiziente Prozesse entwickelt, mit denen Aluminiumoxid aus den verbliebenen Erzen in der gewünschten Reinheit gewonnen werden kann.

Die US 5,174,865 A betrifft ein Verfahren zur Aufreinigung von roher Salzsäure mit mehreren Destillationsschritten. Im Verfahren wird die Rohsalzsäure zunächst einem Zwischenlager zugeführt und dann in die erste der insgesamt drei sequentiellen Destillationseinheiten übergeleitet. Jede der Destillationseinheiten umfasst einen Wärmetauscher, welcher die Rohsalzsäure vorwärmt, bevor diese in die eigentliche Destillationskolonne überführt wird.

In AU 2014 253 487 A1 und AU 2018 101 228 A4 sind Prozesse beschrieben, die von Kaolin ausgehen. Dabei wird in unterschiedlichen Prozessschritten Chlorwasserstoff in Form von Gas und in Form von Salzsäure eingesetzt. Aus dem zerkleinerten und calcinierten Erz wird das Aluminium mit Salzsäure herausgelöst. Dabei gehen auch andere, im Erz enthaltenen Metalle in Lösung. Unlösliche Bestandteile, wie z.B. SiO₂, werden von der Lösung anschließend durch fest-flüssig-Trennung abgetrennt. Der dabei erhaltene Überstand enthält neben großen Mengen an gelöstem Aluminium auch andere gelöste Metalle, z.B. Spuren von Eisen, Magnesium, Mangan, Calcium, Natrium und/oder Kalium. Die Abtrennung des Aluminiums von den anderen gelösten Metallen erfolgt, indem man den HCl-Gehalt des ohnehin salzsauren Überstands steigert (z.B. durch Einleiten von HCl-Gas), wodurch Aluminiumchlorid-Hexahydrat ausfällt. Das Aluminiumchlorid-Hexahydrat wird vom Überstand der Aluminiumchlorid-Hexahydrat-Fällung abgetrennt und durch Erhitzen auf bis zu 1300 °C zu alpha-Aluminiumoxid umgesetzt, wobei chlorwasserstoffhaltiges Röstgas ausgetrieben wird.

Bei derartigen, HCl-getriebenen Prozessen zur Aluminiumoxidgewinnung fallen HCl-reiche Nebenprodukte bzw. Nebenproduktströme an. Zu diesen gehört der Überstand der Aluminiumchlorid-Hexahydrat-Fällung, der eine hohe HCl-Konzentration aufweist und zudem nicht mitausgefälltes Aluminium und andere nicht mitausgefällte Metalle enthält. Zusätzlich fällt das chlorwasserstoffhaltige Röstgas an. Es ist sehr schwer zu handhaben, da es sehr heiß und hochgradig korrosiv ist. Es wurde noch kein vollends zufriedenstellender Vorschlag gemacht zur Handhabung dieser HCl-reichen Nebenproduktströme.

Der vorliegenden Erfindung liegt die Aufgabe zugrunde, eine Einheit für die beschriebenen, HCl-getriebenen Prozesse zur Aluminiumoxidgewinnung bereitzustellen, mit deren Hilfe eine hohe Reinheit des Aluminiumoxids gewährleistet und zugleich eine besonders effiziente Prozessführung erzielt wird. Insbesondere soll die Einheit im Zusammenwirken mit dem HCl-getriebenen Prozess einem Verschleppen von im Erz mitenthaltenen Metallen ins Aluminiumoxid effektiv entgegenwirken. Dies soll im Wesentlichen ohne die Zufuhr von frisch-HCl von außen und mit möglichst geringem Entsorgungsaufwand für chlorwasserstoffbelastete Nebenprodukte erreicht werden.

Diese Aufgabe wird gelöst durch eine Einheit zur Rückgewinnung von Chlorwasserstoff aus einer chlorwasserstoffsauren, mit schwer- oder nichtflüchtigen Verunreinigungen belasteten, wässrigen Flüssigkeit, aufweisend
- eine Verdampfungseinheit zur Bildung eines chlorwasserstoffhaltigen Dampfes und eines, mit den schwer- oder nichtflüchtigen Verunreinigungen belasteten Flüssigkonzentrats aus der Flüssigkeit,
- eine erste Destillationseinheit zur Trennung des chlorwasserstoffhaltigen Dampfes in ein erstes Kopfprodukt und eine erstes Sumpfprodukt, und
- eine zweite Destillationseinheit zur Trennung eines chlorwasserstoffhaltigen wässrigen Fluids in ein zweites Kopfprodukt und ein zweites Sumpfprodukt,
   wobei
- eine dieser beiden Destillationseinheiten ausgelegt ist, um eine Destillation darin oberhalb des Umgebungsdrucks durchführen zu können und die andere dieser beiden Destillationseinheiten ausgelegt ist, um eine Destillation darin unterhalb des Umgebungsdrucks durchführen zu können, und
- die erste Destillationseinheit fluidleitend so mit der zweiten Destillationseinheit verbunden ist, dass mindestens ein Teil des ersten Sumpfprodukts mindestens einen Teil des chlorwasserstoffhaltigen wässrigen Fluids zu bilden vermag.

Das Kopfprodukt der Destillationseinheit, die für eine Destillation oberhalb des Umgebungsdrucks ausgelegt ist, ist sehr reich an Chlorwasserstoff und enthält z.B. mindestens 90 Gew.-% Chlorwasserstoff. Es ist (quasi) frei von schwer- oder nichtflüchtigen Verunreinigungen, wie z.B. Metallen. Dieses Kopfprodukt kann also bevorzugt verwendet werden, um ein Aluminiumchlorid-Hexahydrat aus einer aluminiumhaltigen Lösung auszufällen, z.B. aus dem Überstand, der im Prozess der AU 2018 101 228 A4 nach der Abtrennung von SiO₂ erhalten wird. Das Kopfprodukt ersetzt frisch-HCl, das andernfalls zugeführt werden müsste. Bei bestimmten erfindungsgemäßen Einheiten ist ein Tropfenabscheidevorrichtung integriert, durch die das Kopfprodukt der Destillationseinheit, die für eine Destillation oberhalb des Umgebungsdrucks ausgelegt ist, geführt wird. Dadurch wird es möglich, einen Gesamtgehalt an metallischen Verunreinigungen unter 10 ppmw zu erreichen.

Als chlorwasserstoffsaure, mit schwer- oder nichtflüchtigen Verunreinigungen belastete, wässrige Flüssigkeit kann z.B. jeder Überstand einer durch Steigerung der HCl-Konzentration bewirkten Aluminiumchlorid-Hexahydrat-Fällung dienen, z.B. der in HCl-getriebenen Prozessen zur Gewinnung von Aluminiumoxid anfallende Überstand der Aluminiumchlorid-Hexahydrat-Fällung. Die schwer- oder nichtflüchtigen Verunreinigungen umfassen dann das nicht mitausgefällte Aluminium und die nicht mitausgefällten anderen Metalle. Jedoch kann mit Hilfe der erfundenen Einheit auch jede andere chlorwasserstoffsaure, mit schwer- oder nichtflüchtigen Verunreinigungen belastete, wässrige Flüssigkeit behandelt werden. Z.B. jede chlorwasserstoffsaure, wässrige Flüssigkeit die in einem sauren Aufschluss mit einem Erz in Kontakt gebracht worden ist.

Überraschenderweise zeigte sich, dass das erste und/oder zweite Sumpfprodukt, das sich beim Betrieb der erfindungsgemäßen Einheit in den Destillationseinheiten unten sammeln, je ideale Absorptionsflüssigkeiten zur Aufnahme weiteren Chlorwasserstoffs darstellen. Beispielsweise entstehen im Prozess von AU 2018 101 228 A4 chlorwasserstoffhaltige Röstgase, aus denen sich Chlorwasserstoffgas durch Absorption in mindestens eines der Sumpfprodukte mindestens teilweise abtrennen lässt. Somit eignet sich die erfindungsgemäße Einheit gleichermaßen für die Behandlung von chlorwasserstoffsauren, mit schwer- oder nichtflüchtigen Verunreinigungen belasteten, wässrigen Flüssigkeiten und für die Behandlung chlorwasserstoffbelasteter Gase.

Die Erfindung ist universell in Verbindung mit jedem Prozess einsetzbar, bei dem HCl und/oder Salzsäure benötigt werden und chlorwasserstoffsaure, mit schwer- oder nichtflüchtigen Verunreinigungen belastete, wässrige Nebenprodukte anfallen.

Die vorliegende Erfindung ist bezüglich der Art der Verdampfungseinheit nicht beschränkt. Zur Bildung des chlorwasserstoffhaltigen Dampfes aus der wässrigen Flüssigkeit können die dem Fachmann bekannten, gegenüber Chlorwasserstoff und Salzsäure hinreichend korrosionsfesten Verdampfungseinheiten eingesetzt werden können. Gute Ergebnisse werden insbesondere erzielt, wenn der chlorwasserstoffhaltige Dampf aus der wässrigen Flüssigkeit in einer Verdampfungseinheit gebildet wird, welche wenigstens einen Verdampfer ausgewählt unter Naturumlaufverdampfern, Zwangsumlaufverdampfern, Kettle-Verdampfern, Fallfilmverdampfern und beliebigen Kombinationen der vorstehenden Verdampfer umfasst. Besonders bevorzugt sind Zwangsumlaufverdampfer. Darin tritt besonders wenig Kristallisation (Fouling) auf. Das sich bildende Flüssigkonzentrat kann dann weiter aufkonzentriert werden, so dass ein besonders kleines Volumen, nachzubehandelnder, mit den schweroder nichtflüchtigen Verunreinigungen, z.B. Metallen, belasteter Flüssigkeit anfällt. Sofern die Verdampfungseinheit einen Zwangsumlaufverdampfer umfasst, kann diesem auch ein Flashverdampfer nachgeschaltet sein.

Obwohl es im Rahmen der vorliegenden Erfindung grundsätzlich möglich ist, dass die Verdampfungseinheit mehrstufig ausgebildet ist, sind einstufige Verdampfungseinheiten besonders bevorzugt.

In Abgrenzung zu einstufig bedeutet mehrstufig im Zusammenhang mit der Verdampfungseinheit, dass mindestens eine vorgelagerte und eine nachgelagerte Verdampferstufe bestehen. In der vorgelagerten Verdampferstufe wird ein Teil des chlorwasserstoffhaltigen Dampfes gebildet. Dieser Teil des chlorwasserstoffhaltigen Dampfes stellt mindestens einen Teil der thermischen Energie für den Betrieb der nachgelagerten Verdampferstufe bereit. In der nachgelagerten Verdampferstufe wird ein Teil der Flüssigkeit verdampft, die in der ersten Verdampferstufe noch nicht verdampft wurde. Die nachgelagerte Verdampferstufe wird im Allgemeinen bei niedrigerem Druck und/oder bei niedrigerer Temperatur betrieben, als die vorgelagerte Verdampferstufe.

Die einstufige Verdampfungseinheit ist wegen der apparativen Einfachheit bevorzugt. Außerdem verwirklicht die Erfindung die einer zweistufigen Verdampfung innewohnende Energierückgewinnung auch mit einstufiger Verdampfungseinheit. Denn der chlorwasserstoffhaltige Dampf trägt zur Beheizung des Sumpfes der ersten Destillationseinheit bei.

Um die Verdampfungseinheit vor einem korrosiven Angriff durch die chlorwasserstoffsaure, wässrige Flüssigkeit zu schützen, sind mit der Flüssigkeit und/oder mit dem chlorwasserstoffhaltigen Dampf in Kontakt kommende Innenflächen der Verdampfungseinheit zumindest abschnittsweise bevorzugt aus Graphit, Siliciumcarbid, kohlenstofffaserhaltigen Verbundwerkstoffen, fluorierten Polymeren, Emaille, Glas, glasfaserverstärktem Kunststoff (GFK) und/oder gummierten Stählen gebildet, wobei Graphit, Siliciumcarbid und/oder Polytetrafluorethylen besonders bevorzugt sind. Dies steigert die Langlebigkeit der Verdampfungseinheit. Das Graphit ist vorzugsweise mit Harz, wie beispielsweise Phenolharz, imprägniert. Polytetrafluorethylen kann als Beschichtung oder als Folie auf Innenflächen aufgebracht sein.

Beim Betrieb der Verdampfungseinheit wird die Flüssigkeit zu dem Flüssigkonzentrat aufkonzentriert. Vorzugsweise weist die Verdampfungseinheit einen Flüssigkeitsabzug zur Abfuhr des sich bildenden Flüssigkonzentrats auf. Der Begriff Flüssigkonzentrat bringt zum Ausdruck, dass die schwer- oder nichtflüchtigen Verunreinigungen darin in höherer Konzentration (d.h. mit einem höheren Massenanteil) vorliegen, als in der Flüssigkeit. Das Flüssigkonzentrat kann auch Feststoff enthalten, z.B. dispergierte Metallsalze. Mit Abfuhr des sich bildenden Flüssigkonzentrats ist gemeint, dass schwer- bzw. nichtflüchtige Substanzen, z.B. darin gelöste Metallionen oder dispergierte Metallsalze über den Flüssigkeitsabzug nicht in eine der Destillationseinheiten geführt werden. Das ermöglicht letztlich, ein hochreines HCl Gas zu generieren.

Die Verdampfungseinheit kann einen Phasenabscheider aufweisen. In den Phasenabscheider strömt der bei der Verdampfung entstehende Dampf. Im Phasenabscheider sammelt sich Flüssigkeit, die vom Dampf in Form von Tröpfchen mitgerissen wird. Der Phasenabscheider weist vorzugsweise eine Rückführleitung auf, um die sich sammelnde Flüssigkeit erneut der Verdampfung zuzuführen. Dies hat den Vorteil, dass noch weniger schwer- bzw. nichtflüchtige Substanzen, z.B. gelöste Metallionen, in die erste Destillationseinheit getragen werden, in deren Sumpf sie sich andernfalls sammeln würden. Die erfindungsgemäße Einheit wird dadurch noch effizienter, da keine oder nur ein sehr geringer Anteil an Sumpfprodukten ausgeschleust werden muss, um einer unerwünschten Akkumulation von schwer- bzw. nichtflüchtige Substanzen, wie z.B. gelösten Metallionen in den Sumpfprodukten entgegenzuwirken.

Die Verdampfungseinheit ist erfindungsgemäß fluidleitend so mit der ersten Destillationseinheit verbunden, dass mindestens ein Teil des chlorwasserstoffhaltigen Dampfs, vorzugsweise der gesamte chlorwasserstoffhaltige Dampf, in die erste Destillationseinheit gelangen kann. Die fluidleitende Verbindung der beiden Einheiten kann beispielsweise durch eine Leitung gegeben sein, die von der Verdampfungseinheit zu der ersten Destillationseinheit führt. In die fluidleitende Verbindung kann eine Tropfenabscheidevorrichtung integriert sein. In der Tropfenabscheidevorrichtung werden Tröpfchen abgeschieden, die andernfalls gewisse Mengen an schwer- bzw. nichtflüchtige Substanzen, z.B. gelöste Metallionen, in die erste Destillationseinheit tragen würden. Es kann auch eine Abzweigung eines Teils des chlorwasserstoffhaltigen Dampfes erfolgen.

Die fluidleitende Verbindung der Verdampfungseinheit mit der ersten Destillationseinheit mündet bevorzugt in einen unteren Bereich der ersten Destillationseinheit. Es zeigte sich, dass Wärme, die in der Verdampfungseinheit zur Verdampfung eingesetzt wurde mit dem Dampf in die erste Destillationseinheit eingetragen und zur Beheizung des Sumpfes herangezogen werden kann, wenn die fluidleitende Verbindung in den unteren Bereich der ersten Destillationseinheit mündet. Überraschenderweise lässt sich dadurch ein Großteil der Energie einsparen, die anderenfalls zur Beheizung des Sumpfes der ersten Destillationseinheit von außen zugeführt werden müsste.

Die erfindungsgemäße Einheit weist eine erste Destillationseinheit auf. Jede Destillationseinheit, mit der der chlorwasserstoffhaltige Dampf in das erste Kopfprodukt und das erste Sumpfprodukt getrennt werden kann, eignet sich als die erste Destillationseinheit. Das erste Kopfprodukt ist eine niedriger siedende gasförmige Fraktion und das erste Sumpfprodukt eine höher siedende flüssige Fraktion. Vorzugsweise ist die erste Destillationseinheit eine erste Kolonne.

Die erfindungsgemäße Einheit weist darüber hinaus eine zweite Destillationseinheit auf. Als zweite Destillationseinheit eignet sich jede Destillationseinheit, mit der das chlorwasserstoffhaltige wässrige Fluid in das zweite Kopfprodukt und das zweite Sumpfprodukt getrennt werden kann. Das zweite Kopfprodukt ist eine niedriger siedende gasförmige Fraktion und das zweite Sumpfprodukt eine höher siedende flüssige Fraktion. Vorzugsweise ist die zweite Destillationseinheit eine zweite Kolonne.

Der Fachmann kennt gegen den Einfluss von Salzsäure und chlorwasserstoffhaltige Gase hinreichend korrosionsfeste Einbauten, Füllkörper und Auskleidungen und stattet die erste und zweite Destillationseinheit bzw. Kolonne entsprechend aus, z.B. durch Auskleidung mit PTFE.

Erfindungsgemäß ist die erste Destillationseinheit fluidleitend so mit der zweiten Destillationseinheit verbunden, dass mindestens ein Teil des ersten Sumpfprodukts mindestens einen Teil des chlorwasserstoffhaltigen wässrigen Fluids zu bilden vermag. Die fluidleitende Verbindung der beiden Einheiten kann beispielsweise durch eine Leitung gegeben sein, die vom Sumpf der ersten Destillationseinheit zu der zweiten Destillationseinheit führt. Dann bildet das erste Sumpfprodukt das chlorwasserstoffhaltige wässrige Fluid. Vorzugsweise ist in die Leitung ein Tank integriert, wobei ein Abschnitt der Leitung aus einem unteren Bereich des Tanks zur zweiten Destillationseinheit führt. Dies gewährleistet, dass der zweiten Destillationseinheit ein konstanter Strom chlorwasserstoffhaltigen wässrigen Fluids zugeführt werden kann, auch wenn in vorgelagerten Verfahrensschritten Schwankungen auftreten. Die Angabe, dass mindestens ein Teil des ersten Sumpfprodukts mindestens einen Teil des chlorwasserstoffhaltigen wässrigen Fluids zu bilden vermag, bringt jedoch zum Ausdruck, dass die fluidleitende Verbindung z.B. eine Abzweigung aufweisen kann und ein abzweigbarer Teil des ersten Sumpfprodukts nicht der zweiten Destillationseinheit zugeführt wird, sondern aus der Einheit abgeführt wird, z.B. zum Entfernen von (beim Verdampfen in der Verdampfungseinheit mitgerissenen) schwer- oder nichtflüchtigen Verunreinigungen. Alternativ oder zusätzlich kann der fluidleitenden Verbindung ein weiteres Fluid zugeführt werden, z.B. über eine in die Leitung oder den Tank mündende Zufuhrleitung, so dass ein weiterer, nicht aus dem ersten Sumpfprodukt gebildeter Teil des chlorwasserstoffhaltigen wässrigen Fluids auf eine zuführbare Flüssigkeit, zurückgeht.

Erfindungsgemäß sind die beiden Destillationseinheiten unterschiedlich ausgelegt. Eine der beiden Destillationseinheiten ist ausgelegt, um eine Destillation darin oberhalb des Umgebungsdrucks durchführen zu können und die andere dieser beiden Destillationseinheiten ist ausgelegt, um eine Destillation darin unterhalb des Umgebungsdrucks durchführen zu können.

Destillationseinheiten, wie z.B. Kolonnen, die für Betrieb oberhalb des Umgebungsdrucks ausgelegt sind, müssen gegen ein Ausströmen von Fluid von innen nach außen abgedichtet sein. Zusätzlich müssen deren Wände überall so beschaffen sein, dass sie die mit dem Überdruck einhergehenden Zugbelastungen aufnehmen können, ohne sich zu verformen.

Hingegen müssen Destillationseinheiten, wie z.B. Kolonnen, die für Betrieb unterhalb des Umgebungsdrucks ausgelegt sind, gegen ein Einströmen von Umgebungsluft in die Kolonne abgedichtet sein. Zusätzlich müssen deren Wände überall so beschaffen sein, dass sie die mit dem Unterdruck einhergehenden Druckbelastung ohne Verformung standhalten.

Die erste Destillationseinheit kann zur Trennung eines in die Destillationseinheit rückführbaren Fluids und des chlorwasserstoffhaltigen Dampfes in das erste Kopfprodukt und das erste Sumpfprodukt ausgebildet sein. Sie weist dann neben dem Einlass für den chlorwasserstoffhaltigen Dampf einen zusätzlichen Einlass für das rückführbare Fluid auf, der vorzugsweise oberhalb des Einlasses für den chlorwasserstoffhaltigen Dampf angeordnet ist. Im Allgemeinen ist dann die zweite Destillationseinheit fluidleitend so mit der ersten Destillationseinheit verbunden, dass mindestens ein Teil des zweiten Sumpfprodukts mindestens einen Teil des rückführbaren wässrigen Fluids zu bilden vermag. Die fluidleitende Verbindung der beiden Einheiten kann beispielsweise durch eine Leitung gegeben sein, die vom Sumpf der zweiten Destillationseinheit zu der ersten Destillationseinheit führt. Dann bildet das zweite Sumpfprodukt das rückführbare wässrige Fluid. Vorzugsweise ist in die Leitung ein Tank integriert, wobei ein Abschnitt der Leitung aus einem unteren Bereich des Tanks zur ersten Destillationseinheit führt. Dies gewährleistet, dass der ersten Destillationseinheit ein konstanter Strom des wässrigen Fluids zugeführt werden kann, auch wenn in der zweiten Destillationseinheit Schwankungen auftreten. Die Angabe, dass mindestens ein Teil des zweiten Sumpfprodukts mindestens einen Teil des rückführbaren wässrigen Fluids zu bilden vermag, bringt jedoch zum Ausdruck, dass die fluidleitende Verbindung z.B. eine Abzweigung aufweisen kann und ein abzweigbarer Teil des zweiten Sumpfprodukts nicht der ersten Destillationseinheit zugeführt wird, sondern aus der erfindungsgemäßen Einheit abgeführt wird. Alternativ oder zusätzlich kann der fluidleitenden Verbindung ein weiteres Fluid zugeführt werden, z.B. über eine in die Leitung oder den Tank mündende Zufuhrleitung, so dass ein weiterer, nicht aus dem zweiten Sumpfprodukt gebildeter Teil des rückführbaren wässrigen Fluids auf eine zuführbare Flüssigkeit zurückgeht.

Gemäß einer bestimmten Ausführungsform der erfindungsgemäßen Einheiten zur Rückgewinnung von Chlorwasserstoff kann eine Salzsäureentnahmeeinheit vorgesehen sein, durch die ein Teil eines der Sumpfprodukte oder des chlorwasserstoffhaltigen Dampfes angeführt werden kann. Geeignete Salzsäureentnahmeeinheiten sind die hierin genannten Abzweigungen oder die Tanks. Die entnommene Salzsäure kann in einen HCl-getriebenen Prozess zur Gewinnung von Aluminiumoxid recycliert werden und dort z.B. zum Herauslösen von Aluminium aus dem zerkleinerten und calcinierten Erz eingesetzt werden.

Erfindungsgemäß besonders bevorzugt ist es jedoch, sämtliche Salzsäure und sämtliches Chlorwasserstoffgas, das in den HCl-getriebenen Prozess zur Gewinnung von Aluminiumoxid recycliert werden soll, aus dem Kopfprodukt der auf Betreib oberhalb des Umgebungsdrucks ausgelegten Destillationseinheit zu gewinnen, wenn notwendig unter Zufuhr von Wasser zur Bildung der Salzsäure. Dies gewährleistet, dass quasi keine schwer- oder nichtflüchtigen Verunreinigungen in die Aluminiumoxidgewinnung recycliert werden. Dadurch wird eine besonders hohe Reinheit des Aluminiumoxids gewährleistet.

Es wurde oben schon betont, dass das erste und/oder das zweite Sumpfprodukt, das sich beim Betrieb der erfindungsgemäßen Einheit in den Destillationseinheiten unten sammelt, je ideale Absorptionsflüssigkeiten zur Aufnahme weiteren Chlorwasserstoffs darstellen. Hierauf aufbauend wird eine bevorzugte Ausführungsform der erfindungsgemäßen Einheit vorgeschlagen, die zusätzlich zur Rückgewinnung von Chlorwasserstoff aus chlorwasserstoffhaltigem Gas geeignet ist, aufweisend eine Absorptionseinheit zur Absorption von Chlorwasserstoffgas aus dem Gas in ein Absorptionsmittel unter Erhalt eines chlorwasserstoffangereicherten Absorptionsmittels und eines chlorwasserstoffabgereicherten Gases. Bei dem chlorwasserstoffhaltigen Gas kann es sich z.B. um ein bei HCl-getriebenen Prozessen zur Aluminiumoxidgewinnung entstehendes Röstgas handeln. Vorzugsweise ist mindestens eine der Destillationseinheiten fluidleitend so mit der Absorptionseinheit verbunden, dass mindestens ein Teil von mindestens einem der beiden Sumpfprodukte in der Absorptionseinheit als Absorptionsmittel zu dienen vermag.

Als Absorptionseinheit kommt jede Einheit in Betracht, die eine messbare Absorption von Chlorwasserstoff in eine Absorptionsflüssigkeit ermöglicht. Dies ist regelmäßig immer dann der Fall, wenn auch nur ein wenig intensiver Kontakt zwischen dem chlorwasserstoffhaltigen Gas und einem der Sumpfprodukte hergestellt wird. Als Absorptionseinheit kann also z.B. auch ein Quencher dienen. Bevorzugte Absorptionseinheiten weisen Einbauten und/oder Packungen auf, die einen innigen Stoffaustauschkontakt zwischen Gas und Flüssigkeit bewirken.

Die Absorptionseinheit kann eine Absorptionseinheit mit Gegenstromführung von Röstgas und Absorptionsmittel oder mit Gleichstromführung von Röstgas und Absorptionsmittel sein.

Vorzugsweise ist die zweite Destillationseinheit fluidleitend so mit der Absorptionseinheit verbunden, dass mindestens ein Teil des zweiten Sumpfprodukts in der Absorptionseinheit als Absorptionsmittel zu dienen vermag. Die zweite Destillationseinheit kann z.B. fluidleitend über die Absorptionseinheit so mit der ersten Destillationseinheit verbunden sein, dass das zweite Sumpfprodukt als Absorptionsmittel zu fungieren vermag und das chlorwasserstoffangereicherte Absorptionsmittel mindestens einen Teil des rückführbaren wässrigen Fluids zu bilden vermag.

Alternativ kann die Absorptionseinheit so in einen Sumpfumlauf einer Destillationseinheit (bevorzugt der zweiten Destillationseinheit) integriert sein, dass ein Teil des Sumpfprodukts dieser Destillationseinheit (bevorzugt des zweiten Sumpfprodukts) als Absorptionsmittel zu fungieren vermag.

In einer besonders bevorzugten Ausführungsform ist die Absorptionseinheit fluidleitend so mit derjenigen Destillationseinheit verbunden, die ausgelegt ist, um eine Destillation darin unterhalb des Umgebungsdrucks durchführen zu können, dass das chlorwasserstoffabgereicherte Gas aus der Absorptionseinheit in diese Destillationseinheit abziehbar ist. Die fluidleitende Verbindung der Absorptionseinheit mit dieser Destillationseinheit besteht vorzugsweise gasseitig, so dass der in der Destillationseinheit herrschende verminderte Druck einen stetigen Gasstrom aus der Absorptionseinheit in diese Destillationseinheit gut ermöglicht, z.B. über ein Ventil. Dies führt wiederum zu einem Nachströmen chlorwasserstoffhaltigen Gases (z.B. Röstgases) in die Absorptionseinheit. Diese besonders bevorzugte Ausführungsform hat den überraschenden Vorteil, dass Röstgasaustritte in die Umgebung besonders zuverlässig vermieden werden können. Jeder röstgasbildende und röstgasführende Anlagenteil einer Anlage zur Herstellung von Aluminiumoxid kann dann auf Betrieb unter Umgebungsdruck ausgelegt werden. Dies erfolgt auf besonders wirtschaftliche Weise unter Ausnutzung des Unterdrucks, der in der unter Umgebungsdruck betriebenen Destillationseinheit vorherrscht.

In einer bevorzugten erfindungsgemäßen Einheit ist die erste Destillationseinheit ausgelegt, um eine Destillation darin oberhalb des Umgebungsdrucks durchführen zu können und die zweite Destillationseinheit ausgelegt, um eine Destillation darin unterhalb des Umgebungsdrucks durchführen zu können.

In einer anderen erfindungsgemäßen Einheit ist die zweite Destillationseinheit ausgelegt, um eine Destillation darin unterhalb des Umgebungsdrucks durchführen zu können und die erste Destillationseinheit ausgelegt, um eine Destillation darin unterhalb des Umgebungsdrucks durchführen zu können.

Die Erfindung betrifft auch ein Verfahren zur Rückgewinnung von Chlorwasserstoff aus einer chlorwasserstoffsauren, mit schwer- oder nichtflüchtigen Verunreinigungen belasteten wässrigen Flüssigkeit, wobei
- aus der Flüssigkeit in einer Verdampfungseinheit ein chlorwasserstoffhaltiger Dampf und ein mit den schwer- oder nichtflüchtigen Verunreinigungen belastetes Flüssigkonzentrat gebildet wird,
- der chlorwasserstoffhaltige Dampf in einer ersten Destillationseinheit in ein erstes Kopfprodukt und ein erstes Sumpfprodukt getrennt wird,
- ein chlorwasserstoffhaltiges wässriges Fluid in einer zweiten Destillationseinheit in ein zweites Kopfprodukt und ein zweites Sumpfprodukt getrennt wird,
   wobei
- in einer dieser beiden Destillationseinheiten eine Destillation oberhalb des Umgebungsdrucks durchgeführt wird und in der anderen dieser beiden Destillationseinheiten eine Destillation unterhalb des Umgebungsdrucks durchgeführt wird, und
- das erste Sumpfprodukt mindestens einen Teil des chlorwasserstoffhaltigen wässrigen Fluids bildet.

Im Allgemeinen wird mindestens ein Teil des zweiten Sumpfprodukts in die erste Destillationseinheit zurückgeführt.

Vorzugsweise ist das Verfahren kein Extraktivdestillationsverfahren. Die Sumpfprodukte beider Destillationseinheiten sind im Wesentlichen frei von Zusätzen, wie z.B. Salzen oder beinhalten deutlich geringere Konzentrationen an Salzen bezogen auf die Ausgangsströme. Der Anteil an von Chlorwasserstoff und Wasser verschiedenen Zusätzen beträgt in beiden Sumpfprodukten bevorzugt höchstens 20 Gew.-%, besonders bevorzugt höchstens 6 Gew.-% und ganz besonders bevorzugt höchstens 3 Gew.-%. Dies bewirkt, dass das HCl-Kopfprodukt der über Umgebungsdruck betriebenen Destillationseinheit nahezu vollkommen frei von verschleppten, auf Zusätze zurückgehenden Verunreinigungen ist und es zeigte sich überraschend, dass Aluminiumoxid nur deshalb zuverlässig in den gewünschten Reinheitsgraden erhalten werden kann.

Bei bestimmten erfindungsgemäßen Verfahren wird das Kopfprodukt der Destillationseinheit, in der die Destillation oberhalb des Umgebungsdrucks durchgeführt wird, durch eine Tropfenabscheidevorrichtung geführt. Dadurch kann der Gesamtgehalt an metallischen Verunreinigungen in diesem Kopfprodukt auf unter 10 ppmw verringert werden.

Die chlorwasserstoffsaure, mit schwer- oder nichtflüchtigen Verunreinigungen belasteten wässrigen Flüssigkeit weist im Allgemeinen mindestens 0,5 Gew.-%, z.B. mindestens 1 Gew.-% an gelösten Metallen auf und einen Chlorwasserstoffgehalt von mindestens 10 Gew.-%, insbesondere mindestens 15 Gew.-%, bevorzugt mindestens 20 Gew.-%, z.B. mindestens 25 Gew.-%.

Die chlorwasserstoffsaure, mit schwer- oder nichtflüchtigen Verunreinigungen belasteten wässrigen Flüssigkeit kann 0,1 bis 12 Gew.-%, insbesondere 0,3 bis 9 Gew.-%, z.B. 0,5 bis 7 Gew.-% Aluminium; und 0,1 bis 12 Gew.-%, insbesondere 0,3 bis 9 Gew.-%, z.B. 0,5 bis 7 Gew.-% an anderen Metallen; und 10 bis 37 Gew.-%, insbesondere 15 bis 35 Gew.-%, z.B. 20 bis 35 Gew.-% Chlorwasserstoff enthalten. In der Flüssigkeit liegen die Metalle jeweils als Ionen, z.B. mit Hydrathülle oder mit koordinierten oder anders assoziierten Chlorid-Gegenionen vor.

Die Massenanteile an Aluminium und anderen Metallen beziehen sich jeweils auf das als Chlorid vorliegende Aluminium bzw. Metallsalz, in der höchsten, stabilen Oxidationsstufe des jeweiligen Metalls (Eisen wird also als FeCl₃ berücksichtigt). Der Massenanteil an anderen Metallen bezieht sich auf die Summe der Massenanteile aller von Aluminium verschiedenen Metalle. Gemäß einer besonders bevorzugten Ausführungsform des erfindungsgemäßen Verfahrens, wird die chlorwasserstoffsaure, mit schwer- oder nichtflüchtigen Verunreinigungen belastete, wässrige Flüssigkeit gebildet, indem der Chlorwasserstoffgehalt einer aluminiumreichen wässrigen Lösung gesteigert wird, z.B. durch Einleiten eines HCl-haltigen Gases, und das dabei ausfallende Aluminiumchlorid durch fest-Flüssig-Trennung abgetrennt wird. Das HCl-haltige Gas ist vorzugsweise mindestens teilweise aus Kopfprodukt der Destillationseinheit gebildet, in der die Destillation oberhalb des Umgebungsdrucks durchgeführt wird.

Die im Zusammenhang mit der erfindungsgemäßen Einheit hierin beschriebenen Ausgestaltungen der Erfindung gelten auch im Zusammenhang mit dem erfindungsgemäßen Verfahren und umgekehrt.

Vorzugweise dient das erfindungsgemäße Verfahren auch zur Rückgewinnung von Chlorwasserstoff aus einem chlorwasserstoffhaltigen Gas, z.B. chlorwasserstoffhaltigem Röstgas, wobei in einer Absorptionseinheit das chlorwasserstoffhaltige Gas mit einem Absorptionsmittel in Kontakt gebracht wird. Das Absorptionsmittel kann dann z.B. mindestens teilweise aus mindestens einem Teil mindestens einer der beiden Sumpffraktionen gebildet werden. Es versteht sich, dass Sumpffraktion hier gleichbedeutend ist mit Sumpfprodukt.

Vorzugsweise wird die erste Destillationseinheit oberhalb des Umgebungsdrucks betrieben und die zweite Destillationseinheit unterhalb des Umgebungsdrucks betrieben. Alternativ kann die zweite Destillationseinheit oberhalb des Umgebungsdrucks betrieben werden und die erste Destillationseinheit unterhalb des Umgebungsdrucks betrieben werden. Der Fachmann weiß, wie die jeweilige Destillationseinheit für Überdruck- bzw. Unterdruckbetrieb ausgelegt werden kann.

Die Erfindung betrifft auch ein Set, z.B. eine Baugruppe, zur Errichtung einer erfindungsgemäßen Einheit zur Rückgewinnung von Chlorwasserstoff aus einer chlorwasserstoffsauren, mit schwer- oder nichtflüchtigen Verunreinigungen belasteten, wässrigen Flüssigkeit; umfassend
- die Verdampfungseinheit (30), aufweisend
   einen Einlass,
   einen Auslass und
   einen Flüssigkeitsabzug,
- die erste Destillationseinheit (10), aufweisend
   einen Einlass,
   einen oberen Auslass und
   einen unteren Auslass,
- die zweite Destillationseinheit (20), aufweisend
   einen Einlass,
   einen oberen Auslass und
   einen unteren Auslass,
wobei eine dieser beiden Destillationseinheiten ausgelegt ist, um eine Destillation darin oberhalb des Umgebungsdrucks durchführen zu können und die andere dieser beiden Destillationseinheiten ausgelegt ist, um eine Destillation darin unterhalb des Umgebungsdrucks durchführen zu können, und das Set, z.B. die Baugruppe, zu einer Verschaltung der Verdampfungseinheit und der beiden Destillationseinheiten ausgebildet ist, wie für die erfindungsgemäße Einheit beschrieben. Das Set, z.B. die Baugruppe, kann ein Verbindungselement, z.B. eine Leitung, zur Herstellung einer fluidleitenden Verbindung von dem Auslass der Verdampfungseinheit zu dem Einlass der ersten Destillationseinheit und/oder ein Verbindungselement zur Herstellung einer fluidleitenden Verbindung von dem unteren Auslass der ersten Destillationseinheit zu dem Einlass der zweiten Destillationseinheit umfassen.

Es versteht sich, dass das Set, z. B. die Baugruppe, auch die hierin beschriebene Absorptionseinheit umfassen kann. Die Absorptionseinheit weist dann typischerweise einen Flüssigkeitseinlass, einen Flüssigkeitsauslass, einen Gaseinlass und einen Gasauslass auf. Das Set, z. B. die Baugruppe, mit Absorptionseinheit ist dann zu einer Verschaltung mit der Verdampfungseinheit und den beiden Destillationseinheiten ausgebildet, wie für eine erfindungsgemäße Einheit mit Absorptionseinheit beschrieben. Das Set, z.B. die Baugruppe, kann außerdem mindestens ein Verbindungselement umfassen, mit dem sich eine fluidleitende Verbindung von mindestens einem unteren Auslass von einer der Destillationseinheiten zu dem Flüssigkeitseinlass der Absorptionseinheit herstellen lässt.

Die im Zusammenhang mit der erfindungsgemäßen Einheit hierin beschriebenen Ausgestaltungen der Erfindung gelten auch im Zusammenhang mit dem erfindungsgemäßen Set, z.B. im Zusammenhang mit der erfindungsgemäßen Baugruppe, und umgekehrt.

Die Erfindung wird durch die nachfolgenden Figuren veranschaulicht, ohne darauf beschränkt zu sein.

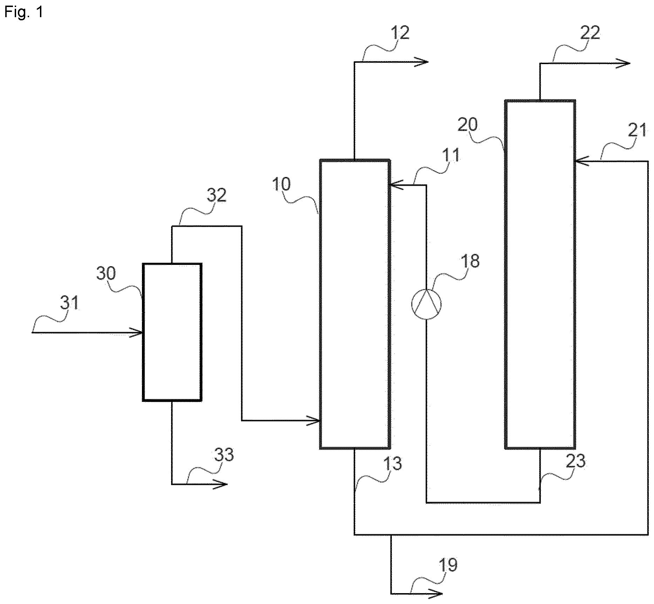

Figur 1, Figur 2 und Figur 3 zeigen unterschiedliche Ausgestaltungen der erfindungsgemäßen Einheit zur Rückgewinnung von HCl.

Figur 1 zeigt eine Einheit **1** zur Rückgewinnung von Chlorwasserstoff aus einem chlorwasserstoffsauren, mit schwer- oder nichtflüchtigen Verunreinigungen (hier gelöstes Aluminium und andere Metalle) belasteten wässrigen Flüssigkeit **31.** Die Einheit **1** weist eine Verdampfungseinheit **30** zur Bildung eines chlorwasserstoffhaltigen Dampfes **32** und eines Flüssigkonzentrats **33** aus der Flüssigkeit **31** auf. Details der Verdampfungseinheit, wie z.B. die Heizeinheit zur Bereitstellung der für die Verdampfung erforderlichen Hitze, ein Phasenabscheider zur Rückführung von mitgerissenen, metallhaltigen Flüssigkeitströpfchen, sind nicht gezeigt. Die Einheit **1** weist auch eine erste Destillationseinheit **10** zur Trennung des chlorwasserstoffhaltigen Dampfes **32** in ein erstes Kopfprodukt **12** und ein erstes Sumpfprodukt **13** auf. Die Einheit **1** weist außerdem eine zweite Destillationseinheit **20** zur Trennung eines zweiten chlorwasserstoffhaltigen wässrigen Fluids **21** in ein zweites Kopfprodukt **22** und ein zweites Sumpfprodukt **23** auf. Das chlorwasserstoffhaltigen wässrigen Fluid **21** ist aus dem ersten Sumpfprodukt **13** gebildet, wobei ein Teilstrom **19** des ersten Sumpfprodukts **13** ausgeschleust wird, um einer Anreicherung von Metallverunreinigungen in den Destillationseinheiten entgegenzuwirken. Das in einen oberen Bereich der ersten Destillationseinheit **10** rückgeführte Fluid **11** ist aus dem zweiten Sumpfprodukt **23** gebildet. Die in den Figuren gezeigten Destillationseinheiten **10, 20** sind Kolonnen. Zur Vereinfachung sind Heizeinheiten zur Beheizung der Kolonnensümpfe und Kühleinheiten zur Kühlung der Kolonnenköpfe nicht gezeigt. Im hier veranschaulichten Beispiel ist die erste Destillationseinheit **10** ausgelegt, um eine Destillation darin oberhalb des Umgebungsdrucks durchführen zu können. Die zweite Destillationseinheit **20** ist ausgelegt, um eine Destillation darin unterhalb des Umgebungsdrucks durchführen zu können. Die Pumpe **18** fördert das Sumpfprodukt **23** gegen ein Druckgefälle. Die für den jeweiligen Betriebsdruck der jeweiligen Kolonne erforderlichen Dichtungen, Wandstärken und Kolonnenmaterialien sind nicht angedeutet. Ebenso sind auch die gegenüber der Einwirkung von Salzsäure bzw. Chlorwasserstoffgas resistenten Auskleidungen der verschiedenen Einheiten nicht gezeigt. Auch Tanks und Wärmetauscher sind nicht dargestellt.

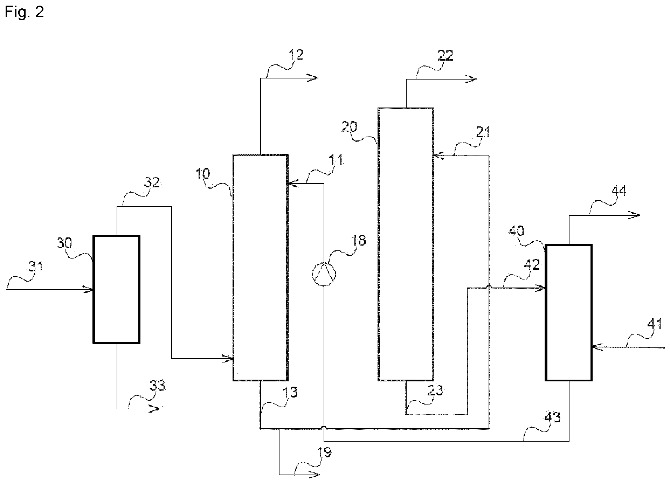

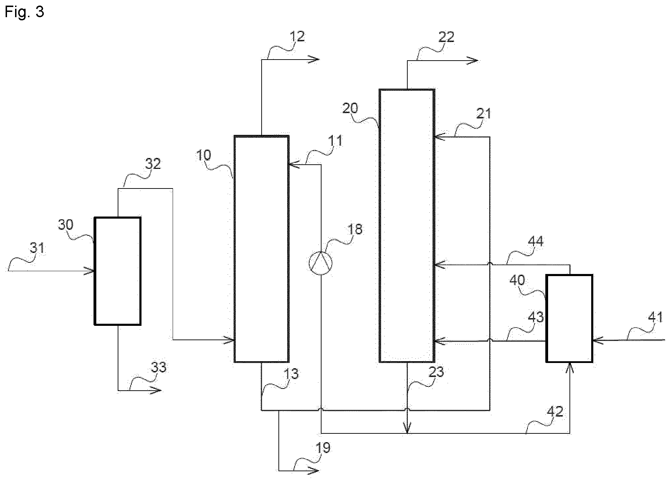

In Figuren 2 und 3 haben dieselben Bezugszeichen dieselbe Bedeutung, wie in Figur 1. Die in Figuren 2 und 3 gezeigten, erfindungsgemäßen Einheiten 1 zur Rückgewinnung von Chlorwasserstoff weisen außerdem eine Absorptionseinheit **40** auf. Die Absorptionseinheit dient zur Absorption von Chlorwasserstoff aus einem chlorwasserstoffhaltigen Gas **41** (z.B. Röstgas) in ein Absorptionsmittel **42** unter Erhalt eines chlorwasserstoffangereicherten Absorptionsmittels **43** und eines chlorwasserstoffabgereicherten Gases **44.**

In der Einheit **1** der Figur 2 ist die zweite Destillationseinheit **20** fluidleitend so mit der Absorptionseinheit **40** verbunden, dass das zweite Sumpfprodukt **23** in der Absorptionseinheit **40** als Absorptionsmittel **42** dient. Die Absorptionseinheit **40** ist fluidleitend so mit der ersten Destillationseinheit **10** verbunden, dass das chlorwasserstoffangereicherte Absorptionsmittels **43** das rückgeführte Fluid **11** bildet. Ein in der Absorptionseinheit **40** nicht ins chlorwasserstoffabgereicherte Gas **44** übergegangener Teil des zweiten Sumpfprodukts **23** bildet hier also einen Teil des rückgeführten wässrigen Fluids **11,** wobei das Fluid **11** außerdem absorbierte Anteile des chlorwasserstoffhaltigen Gas **41** umfasst. In der Absorptionseinheit **40** wird das Absorptionsmittel **42** von oben nach unten im Gegenstrom zu dem aufsteigenden Gas **41** geführt.

In der Einheit **1** der Figur 3 ist die Absorptionseinheit **40** so in den Sumpfumlauf der zweiten Destillationseinheit **20** integriert, dass ein Teil des zweiten Sumpfprodukts **23** als Absorptionsmittel **42** fungiert. Das chlorwasserstoffabgereicherte Gas **44** wird in die zweite Destillationseinheit **20** abgezogen, die - wie oben zu Figur 1 beschrieben - ausgelegt ist, um eine Destillation darin unterhalb des Umgebungsdrucks durchführen zu können.

### Bezugszeichenliste:

| | |
|---|---|
| Einheit zur Rückgewinnung von Chlorwasserstoff | **1** |
| erste Destillationseinheit | **10** |
| rückführbares Fluid | **11** |
| erstes Kopfprodukt | **12** |
| erstes Sumpfprodukt | **13** |
| Pumpe | **18** |
| Teilstrom | **19** |
| zweite Destillationseinheit | **20** |
| chlorwasserstoffhaltiges wässriges Fluid | **21** |
| zweites Kopfprodukt | **22** |
| zweites Sumpfprodukt | **23** |
| Verdampfungseinheit | **30** |
| chlorwasserstoffsaure, mit schwer- oder nichtflüchtigen | |
| Verunreinigungen belastete, wässrige Flüssigkeit | **31** |
| chlorwasserstoffhaltiger Dampf | **32** |
| Flüssigkonzentrat | **33** |
| Absorptionseinheit | **40** |
| chlorwasserstoffhaltiges Gas | **41** |
| Absorptionsmittel | **42** |
| chlorwasserstoffangereichertes Absorptionsmittel | **43** |
| chlorwasserstoffabgereichertes Gas | **44** |

## Patentansprüche

1. Einheit (1) zur Rückgewinnung von Chlorwasserstoff aus einer chlorwasserstoffsauren, mit schwer- oder nichtflüchtigen Verunreinigungen belasteten, wässrigen Flüssigkeit (31), aufweisend
- eine Verdampfungseinheit (30) zur Bildung eines chlorwasserstoffhaltigen Dampfes (32) und eines, mit den schwer- oder nichtflüchtigen Verunreinigungen belasteten Flüssigkonzentrats (33) aus der Flüssigkeit (31),
- eine erste Destillationseinheit (10) zur Trennung des chlorwasserstoffhaltigen Dampfes (32) in ein erstes Kopfprodukt (12) und eine erstes Sumpfprodukt (13), und
- eine zweite Destillationseinheit (20) zur Trennung eines chlorwasserstoffhaltigen wässrigen Fluids (21) in ein zweites Kopfprodukt (22) und ein zweites Sumpfprodukt (23),
wobei
- eine dieser beiden Destillationseinheiten ausgelegt ist, um eine Destillation darin oberhalb des Umgebungsdrucks durchführen zu können und die andere dieser beiden Destillationseinheiten ausgelegt ist, um eine Destillation darin unterhalb des Umgebungsdrucks durchführen zu können, und
- die erste Destillationseinheit (10) fluidleitend so mit der zweiten Destillationseinheit (20) verbunden ist, dass mindestens ein Teil des ersten Sumpfprodukts (13) mindestens einen Teil des chlorwasserstoffhaltigen wässrigen Fluids (21) zu bilden vermag.

2. Einheit (1) nach Anspruch 1, aufweisend
- eine erste Destillationseinheit (10) zur Trennung eines in die Destillationseinheit (10) rückführbaren Fluids (11) und des chlorwasserstoffhaltigen Dampfes (32) in das erste Kopfprodukt (12) und das erste Sumpfprodukt (13),
wobei
- die zweite Destillationseinheit (20) fluidleitend so mit der ersten Destillationseinheit (10) verbunden ist, dass mindestens ein Teil des zweiten Sumpfprodukts (23) mindestens einen Teil des rückführbaren wässrigen Fluids (11) zu bilden vermag.

3. Einheit (1) nach Anspruch 1 oder 2 zur Rückgewinnung von Chlorwasserstoff aus einer chlorwasserstoffsauren, mit schwer- oder nichtflüchtigen Verunreinigungen belasteten wässrigen Flüssigkeit (31) und zur Rückgewinnung von Chlorwasserstoff aus einem chlorwasserstoffhaltigen Gas (41), aufweisend
- eine Absorptionseinheit (40) zur Absorption von Chlorwasserstoffgas aus dem Gas (41) in ein Absorptionsmittel (23, 42) unter Erhalt eines chlorwasserstoffangereicherten Absorptionsmittels (43) und eines chlorwasserstoffabgereicherten Gases (44).

4. Einheit (1) nach Anspruch 3, wobei mindestens eine der Destillationseinheiten (10, 20) fluidleitend so mit der Absorptionseinheit (40) verbunden ist, dass mindestens ein Teil von mindestens einem der beiden Sumpfprodukte (13, 23) in der Absorptionseinheit (40) als Absorptionsmittel (42) zu dienen vermag.

5. Einheit (1) nach Anspruch 4, wobei die zweite Destillationseinheit (20) fluidleitend so mit der Absorptionseinheit (40) verbunden ist, dass mindestens ein Teil des zweiten Sumpfprodukts (23) in der Absorptionseinheit (40) als Absorptionsmittel (42) zu dienen vermag.

6. Einheit (1) nach Anspruch 3, wobei die zweite Destillationseinheit (20) fluidleitend über die Absorptionseinheit (40) so mit der ersten Destillationseinheit (10) verbunden ist, dass das zweite Sumpfprodukt (23) als Absorptionsmittel (42) fungieren zu vermag und das chlorwasserstoffangereicherte Absorptionsmittel (43) mindestens einen Teil des rückführbaren wässrigen Fluids (11) zu bilden vermag.

7. Einheit (1) nach Anspruch 5, wobei die Absorptionseinheit (40) so in einen Sumpfumlauf der zweiten Destillationseinheit (20) integriert ist, dass ein Teil des zweiten Sumpfprodukts (23) als Absorptionsmittel (42) zu fungieren vermag.

8. Einheit (1) nach Anspruch 3, wobei die Absorptionseinheit (40) fluidleitend so mit derjenigen Destillationseinheit (10, 20) verbunden ist, die ausgelegt ist, um eine Destillation darin unterhalb des Umgebungsdrucks durchführen zu können, dass das chlorwasserstoffabgereicherte Gas (44) aus der Absorptionseinheit (40) in diese Destillationseinheit (10, 20) abziehbar ist.

9. Einheit (1) nach Anspruch 1, wobei die erste Destillationseinheit (10) ausgelegt ist, um eine Destillation darin oberhalb des Umgebungsdrucks durchführen zu können und die zweite Destillationseinheit (20) ausgelegt ist, um eine Destillation darin unterhalb des Umgebungsdrucks durchführen zu können.

10. Einheit (1) nach Anspruch 1, wobei die zweite Destillationseinheit (20) ausgelegt ist, um eine Destillation darin oberhalb des Umgebungsdrucks durchführen zu können und die erste Destillationseinheit (10) ausgelegt ist, um eine Destillation darin unterhalb des Umgebungsdrucks durchführen zu können.

11. Verfahren zur Rückgewinnung von Chlorwasserstoff aus einer chlorwasserstoffsauren, mit schwer- oder nichtflüchtigen Verunreinigungen belasteten wässrigen Flüssigkeit (31), wobei
- aus der Flüssigkeit (31) in einer Verdampfungseinheit (30) ein chlorwasserstoffhaltiger Dampf (32) und ein mit den schwer- oder nichtflüchtigen Verunreinigungen belastetes Flüssigkonzentrat (33) gebildet wird,
- der chlorwasserstoffhaltige Dampf (32) in einer ersten Destillationseinheit (10) in ein erstes Kopfprodukt (12) und ein erstes Sumpfprodukt (13) getrennt wird,
- ein chlorwasserstoffhaltiges wässriges Fluid (21) in einer zweiten Destillationseinheit (20) in ein zweites Kopfprodukt (22) und ein zweites Sumpfprodukt (23) getrennt wird,
wobei
- in einer dieser beiden Destillationseinheiten eine Destillation oberhalb des Umgebungsdrucks durchgeführt wird und in der anderen dieser beiden Destillationseinheiten eine Destillation unterhalb des Umgebungsdrucks durchgeführt wird, und
- das erste Sumpfprodukt (13) mindestens einen Teil des chlorwasserstoffhaltigen wässrigen Fluids (21) bildet.

12. Verfahren nach Anspruch 11, zur Rückgewinnung von Chlorwasserstoff aus einer chlorwasserstoffsauren, mit schwer- oder nichtflüchtigen Verunreinigungen belasteten wässrigen Flüssigkeit (31) und zur Rückgewinnung von Chlorwasserstoff aus chlorwasserstoffhaltigem Gas (41), wobei in einer Absorptionseinheit (40) das chlorwasserstoffhaltige Gas (41) mit einem Absorptionsmittel (23, 42) in Kontakt gebracht wird.

13. Set zur Errichtung einer Einheit nach mindestens einem der Ansprüche 1 bis 10; umfassend
- die Verdampfungseinheit (30), aufweisend
einen Einlass,
einen Auslass und
einen Flüssigkeitsabzug,
- die erste Destillationseinheit (10), aufweisend
einen Einlass,
einen oberen Auslass und
einen unteren Auslass,
- die zweite Destillationseinheit (20), aufweisend
einen Einlass,
einen oberen Auslass und
einen unteren Auslass
wobei eine dieser beiden Destillationseinheiten ausgelegt ist, um eine Destillation darin oberhalb des Umgebungsdrucks durchführen zu können und die andere dieser beiden Destillationseinheiten ausgelegt ist, um eine Destillation darin unterhalb des Umgebungsdrucks durchführen zu können,
und das Set zu einer Verschaltung der Verdampfungseinheit und der beiden Destillationseinheiten zu einer Einheit gemäß mindestens einem der Ansprüche 1 bis 10 ausgebildet ist.

## Claims

1. A unit (1) for recovering hydrogen chloride from an aqueous liquid (31) which comprises hydrochloric acid and is contaminated with compounds of low or no volatility, comprising:
- an evaporation unit (30) for forming, from the liquid (31), a vapour (32) which contains hydrogen chloride and a liquid concentrate (33) that is contaminated with the compounds of low or no volatility,
- a first distillation unit (10) for separating the hydrogen-chloride-containing vapour (32) into a first top product (12) and a first bottom product (13), and
- a second distillation unit (20) for separating a hydrogen-chloride-containing aqueous fluid (21) into a second top product (22) and a second bottom product (23), wherein
- one of these two distillation units is configured to be able to implement therein a distillation above the ambient pressure and the other of these two distillation units is configured to be able to implement therein a distillation below the ambient pressure, and
- the first distillation unit (10) is fluid-conducting connected with the second distillation unit (20) such that at least part of the first bottom product (13) is able to form at least part of the hydrogen chloride-containing aqueous fluid (21).

2. The unit (1) according to claim 1, having
- a first distillation unit (10) for separating a fluid (11) which can be returned into the distillation unit (10) and the hydrogen-chloride-containing vapour (32) into the first top product (12) and the first bottom product (13),
wherein
- the second distillation unit (20) is fluid-conducting connected with the first distillation unit (10) in such a way that at least part of the second bottom product (23) is able to form at least part of the returnable aqueous fluid (11).

3. The unit (1) according to claim 1 or 2 for recovering hydrogen chloride from an aqueous liquid (31) which comprises hydrochloric acid and is contaminated with compounds of low or no volatility or and for recovering hydrogen chloride from a hydrogen-chloride-containing gas (41), comprising:
- an absorption unit (40) for absorbing hydrogen chloride gas from the gas (41) into an absorbent (23, 42) so as to obtain a hydrogen-chloride-enriched absorbent (43) and a hydrogen-chloride-depleted gas (44).

4. The unit (1) according to claim 3, wherein at least one of the distillation units (10, 20) is fluid-conducting connected with the absorption unit (40) such that at least part of at least one of the two bottom products (13, 23) is able to serve as an absorbent (42) in the absorption unit (40).

5. The unit (1) according to claim 4, wherein the second distillation unit (20) is in fluid-conducting connection with the absorption unit (40) such that at least part of the second bottom product (23) is able to serve as an absorbent (42) in the absorption unit (40).

6. The unit (1) according to claim 3, wherein the second distillation unit (20) is in fluid-conducting connection with the first distillation unit (10) via the absorption unit (40) such that the second bottom product (23) is able to function as an absorbent (42) and the hydrogen-chloride enriched absorbent (43) is able to form at least one part of the returnable aqueous fluid (11).

7. The unit (1) according to claim 5, wherein the absorption unit (40) is integrated into a bottom circulation of the second distillation unit (20) such that part of the second bottom product (23) is able to function as an absorbent (42).

8. The unit (1) according to claim 3, wherein the absorption unit (40) is in fluid-conducting connection with the distillation unit (10, 20) which is configured to be able to implement therein a distillation below the ambient pressure such that the hydrogen-chloride depleted gas (44) can be withdrawn from the absorption unit (40) into this distillation unit (10, 20).

9. The unit (1) according to claim 1, wherein the first distillation unit (10) is configured to be able to implement therein a distillation above the ambient pressure and the second distillation unit (20) is configured to be able to implement therein a distillation below the ambient pressure.

10. The unit (1) according to claim 1, wherein the second distillation unit (20) is configured to be able to implement therein a distillation above the ambient pressure and the first distillation unit (10) is configured to be able to implement therein a distillation below the ambient pressure.

11. A method for recovering hydrogen chloride from an aqueous liquid (31) which comprises hydrochloric acid and is contaminated with compounds of low or no volatility,
wherein:
- from the liquid (31) in an evaporation unit (30) a hydrogen chloride containing vapour (32) and a liquid concentrate (33) is formed that is contaminated with compounds of low or no volatility,
- the hydrogen-chloride-containing vapour (32) in a first distillation unit (10) is separated into a first top product (12) and a first bottom product (13),
- a hydrogen-chloride-containing aqueous fluid (21) is separated in a second distillation unit (20) into a second top product (22) and a second bottom product (23), wherein
- a distillation above the ambient pressure is implemented in one of these two distillation units and a distillation below the ambient pressure is implemented in the other of these two distillation units, and
- the first bottom product (13) forms at least part of the hydrogen-chloride containing aqueous fluid (21).

12. The method according to claim 11, for recovering hydrogen chloride from an aqueous liquid which comprises hydrochloric acid and is contaminated with compounds of low or no volatility and for recovering hydrogen chloride from hydrogen-chloride-containing gas (41), wherein the hydrogen-chloride-containing gas (41) is brought into contact with an absorbent (23, 42) in an absorption unit (40).

13. A set for setting up a unit according to one of claims 1 to 10;
comprising
- the evaporation unit (30), having
an inlet,
an outlet, and
a liquid draw-off,
- the first distillation unit (10), having
an inlet,
an upper outlet, and
a lower outlet,
- the second distillation unit (20), having
an inlet,
an upper outlet, and
a lower outlet
wherein one of these two distillation units is configured to be able to implement therein a distillation above the ambient pressure and the other of these two distillation units is configured to be able to implement therein a distillation below the ambient pressure,
and the assembly set is designed to interconnect the evaporation unit and the two distillation units to form a unit according to at least one of claims 1 to 10.

## Revendications

1. Unité (1) permettant de récupérer du chlorure d'hydrogène à partir d'un liquide aqueux (31) à base d'acide chlorhydrique, chargé d'impuretés peu ou non volatiles, présentant
- une unité d'évaporation (30) permettant de former une vapeur (32) contenant du chlorure d'hydrogène et un concentré de liquide (33) chargé des impuretés peu ou non volatiles à partir du liquide (31),
- une première unité de distillation (10) permettant de séparer la vapeur (32) contenant du chlorure d'hydrogène en un premier produit de tête (12) et un premier produit de fond (13) et
- une seconde unité de distillation (20) permettant de séparer un fluide aqueux (21) contenant du chlorure d'hydrogène en un second produit de tête (22) et un second produit de fond (23),
dans laquelle
- l'une de ces deux unités de distillation est conçue pour pouvoir y effectuer une distillation au-dessus de la pression ambiante et l'autre de ces deux unités de distillation est conçue pour pouvoir y effectuer une distillation au-dessous de la pression ambiante et
- la première unité de distillation (10) est reliée par conduction de fluide à la seconde unité de distillation (20) de telle sorte qu'au moins une partie du premier produit de fond (13) est capable de former au moins une partie du fluide aqueux (21) contenant du chlorure d'hydrogène.

2. Unité (1) selon la revendication 1, présentant
- une première unité de distillation (10) permettant de séparer un fluide (11) pouvant être recyclé dans l'unité de distillation (10) et de la vapeur (32) contenant du chlorure d'hydrogène en le premier produit de tête (12) et le premier produit de fond (13),
dans laquelle
- la seconde unité de distillation (20) est reliée par conduction de fluide à la première unité de distillation (10) de telle sorte qu'au moins une partie du second produit de fond (23) est capable de former au moins une partie du fluide aqueux (11) pouvant être recyclé.

3. Unité (1) selon la revendication 1 ou 2 permettant de récupérer du chlorure d'hydrogène à partir d'un liquide aqueux (31) à base d'acide chlorhydrique, chargé d'impuretés peu ou non volatiles et permettant de récupérer du chlorure d'hydrogène à partir d'un gaz (41) contenant du chlorure d'hydrogène, présentant
- une unité d'absorption (40) permettant d'absorber du chlorure d'hydrogène gazeux à partir du gaz (41) dans un absorbant (23, 42) en obtenant un absorbant (43) enrichi en chlorure d'hydrogène et un gaz (44) appauvri en chlorure d'hydrogène.

4. Unité (1) selon la revendication 3, dans laquelle au moins l'une des unités de distillation (10, 20) est reliée par conduction de fluide à l'unité d'absorption (40) de telle sorte qu'au moins une partie d'au moins l'un des deux produits de fond (13, 23) est capable de servir d'absorbant(42) dans l'unité d'absorption (40).

5. Unité (1) selon la revendication 4, dans laquelle la seconde unité de distillation (20) est reliée par conduction de fluide à l'unité d'absorption (40) de telle sorte qu'au moins une partie du second produit de fond (23) est capable de servir de milieu d'absorption (42) dans l'unité d'absorption (40).

6. Unité (1) selon la revendication 3, dans laquelle le seconde unité de distillation (20) est reliée par conduction de fluide par l'intermédiaire de l'unité d'absorption (40) avec la première unité de distillation (10) de telle sorte que le second produit de fond (23) est capable de fonctionner comme milieu d'absorption (42) et l'absorbant(43) enrichi en chlorure d'hydrogène est capable de former au moins une partie du fluide aqueux (11) pouvant être recyclé.

7. Unité (1) selon la revendication 5, dans laquelle l'unité d'absorption (40) est intégrée dans une circulation de queue de la seconde unité de distillation (20) de telle sorte qu'au moins une partie du second produit de fond (23) est capable de fonctionner comme absorbant (42).

8. Unité (1) selon la revendication 3, dans laquelle l'unité d'absorption (40) est reliée par conduction de fluide à l'unité de distillation (10, 20) qui est conçue pour pouvoir y effectuer une distillation au-dessous de la pression ambiante, de telle sorte que le gaz (44) appauvri en chlorure d'hydrogène peut être soutiré de l'unité d'absorption (40) dans cette unité de distillation (10, 20).

9. Unité (1) selon la revendication 1, dans laquelle la première unité de distillation (10) est conçue pour pouvoir y effectuer une distillation au-dessus de la pression ambiante et la seconde unité de distillation (20) est conçue pour pouvoir y effectuer une distillation au-dessous de la pression ambiante.

10. Unité (1) selon la revendication 1, dans laquelle la seconde unité de distillation (20) est conçue pour pouvoir y effectuer une distillation au-dessus de la pression ambiante et la première unité de distillation (10) est conçue pour pouvoir y effectuer une distillation au-dessous de la pression ambiante.

11. Procédé permettant de récupérer du chlorure d'hydrogène à partir d'un liquide aqueux (31) à base d'acide chlorhydrique, chargé d'impuretés peu ou non volatiles, dans lequel
- une vapeur (32) contenant du chlorure d'hydrogène et un concentré de liquide (33) chargé des impuretés peu ou non volatiles sont formés à partir du liquide (31) dans une unité d'évaporation (30),
- la vapeur (32) contenant du chlorure d'hydrogène est séparée dans une première unité de distillation (10) en un premier produit de tête (12) et un premier produit de fond (13),
- un fluide aqueux (21) contenant du chlorure d'hydrogène est séparé dans une seconde unité de distillation (20) en un second produit de tête (22) et un second produit de fond (23),
dans lequel
- dans l'une de ces deux unités de distillation, une distillation au-dessus de la pression ambiante est réalisée et dans l'autre de ces deux unités de distillation, une distillation au-dessous de la pression ambiante est réalisée et
- le premier produit de fond (13) forme au moins une partie du fluide aqueux (21) contenant du chlorure d'hydrogène.

12. Procédé selon la revendication 11, permettant de récupérer du chlorure d'hydrogène à partir d'un liquide aqueux (31) à base d'acide chlorhydrique, chargé d'impuretés peu ou non volatiles et permettant de récupérer du chlorure d'hydrogène à partir d'un gaz (41) contenant du chlorure d'hydrogène, dans lequel, dans une unité d'absorption (40) le gaz (41) contenant du chlorure d'hydrogène est mis en contact avec un absorbant (23, 42).

13. Ensemble pour la mise en place d'une unité selon au moins l'une des revendications 1 à 10 ; comprenant
- l'unité d'évaporation (30), présentant
une entrée,
une sortie et
une extraction de liquide,
- la première unité de distillation (10), présentant
une entrée,
une sortie supérieure et
une sortie inférieure,
- la seconde unité de distillation (20), présentant
une entrée,
une sortie supérieure et
une sortie inférieure
dans lequel l'une de ces deux unités de distillation est conçue pour pouvoir y effectuer une distillation au-dessus de la pression ambiante et l'autre de ces deux unités de distillation est conçue pour pouvoir y effectuer une distillation au-dessous de la pression ambiante,
et l'ensemble est conçu pour une interconnexion de l'unité d'évaporation et des deux unités de distillation en une unité selon au moins l'une des revendications 1 à 10.
